# EUROPEAN PATENT SPECIFICATION

(11) **EP 1 440 949 B1**
(45) Date of publication and mention of the grant of the patent: **08.03.2006**
(21) Application number: 02778027.9
(22) Date of filing: 31.10.2002
(51) Int. Cl.: C03B 37/018, C03B 37/014

(54) **METHOD FOR PRODUCING OPTICAL FIBER BASE MATERIAL**
VERFAHREN ZUR HERSTELLUNG VON GRUNDMATERIAL FÜR LICHTLEITFASERN
PROCEDE D'OBTENTION D'UN MATERIAU DE BASE POUR FIBRE OPTIQUE

(30) Priority: 01.11.2001 JP 2001336570
(43) Date of publication of application: 28.07.2004
(73) Proprietor: Sumitomo Electric Industries, Ltd., Osaka-shi, Osaka 541-0041 (JP)
(72) Inventor: NAKAMURA M, Yokohama Works Sumitomo Elec Indus Ltd, Yokohama-shi, Kanagawa 244-8588 (JP); OOISHI T, Yokohama Works Sumitomo Elec Indus Ltd, Yokohama-shi, Kanagawa 244-8588 (JP); OHGA Y, Yokohama Works Sumitomo Elec Indus Ltd, Yokohama-shi, Kanagawa 244-8588 (JP)
(74) Representative: Grünecker, Kinkeldey, Stockmair & Schwanhäusser Anwaltssozietät
(86) International application number: PCT/JP2002/011408
(87) International publication number: WO 2003/037809

(56) References cited:
- EP-A1- 0 845 441
- JP-A- 3 228 845
- JP-A- 3 279 234
- JP-A- 6 072 734
- JP-A- 6 092 667
- PATENT ABSTRACTS OF JAPAN vol. 1998, no. 10, 31 August 1998 (1998-08-31) & JP 10 120430 A (FUJIKURA LTD), 12 May 1998 (1998-05-12)

## Description

### Technical Field

The present invention relates to a method of making an optical fiber preform, in which method a "porous preform (glass particulate deposit body)" is prepared by depositing glass particulate material on a glass rod having a core while burners and the glass rod are subjected to relative movement in reciprocating motion and by clarifying (consolidating) the resulting porous preform.

### Background Art

An outside vapor-phase deposition (OVD) method is one of the known methods of making porous preforms. According to this method, one or more burners for producing glass particulate material are placed facing the side of a rotating glass rod. As the burners and the glass rod are subjected to relative movement in reciprocating motion, glass particulate material are deposited on the surface of the glass rod to form a porous preform.

Japanese Patent No. 2612949 teaches a method of making a porous preform using an apparatus shown in Fig. 7. According to this method, nine burners 7 for producing glass particulate material are placed facing the side of a rotating glass rod 1 substantially over the entire length covering the effective portion of a porous preform 2. Each burner 7 has a controller C for controlling the gas flow rate. Each burner 7 is moved in reciprocating motion parallel to the glass rod 1 by a distance corresponding to the interval between the burners so as to deposit glass particulate material produced by the burners 7 on the glass rod 1 layer by layer and to make a porous preform 2. While in motion, the turning point for reciprocating motion is shifted in a predetermined direction by a predetermined length such that the traveling length of the burner 7 in one direction of the reciprocating motion differs from the traveling length of the burner 7 in the other direction. After the turning point of the movement in reciprocating motion has been shifted by a distance equal to the burner interval, the turning point is shifted in opposite to the above-described predetermined direction by a predetermined distance so that the turning point eventually returns to the initial position. In this manner, the turning point, where the particulate material is deposited in a long time, is varied over the entire length of the porous preform 2, and consequently the amount of the deposited glass particulate material can be made uniform over the entire porous preform 2.

According to this method, glass particulate material produced at a specific burner among the plurality of the burners constitutes only a portion of the porous preform. The soot preform is formed as a result of joining and overlaying of such portions. For the purpose of this specification, this method is referred to as a "multi-burner multi-layer deposition method". The multi-burner multi-layer deposition method can increase the amount of deposited material per unit time corresponding to the number of burners and is thus suitable for making a large porous preform.

Japanese Patent Application Publication No. 10-158025 teaches another multi-burner multi-layer deposition method wherein a burner that travels over the entire length of the glass rod is additionally provided to adjust the amount of the deposited glass particulate material at portions of the deposit having nonuniform outer diameters. Similarly, European Patent Application EP 0845441 teaches a multi-burner multi-layer deposition method. A CCD camera movable along a shaft parallel to the rod-shaped core determines the outer diameter of the deposit along the overall length of the core until deposition is complete. Based on a detected difference from a preset value, an extra single burner movable along a shaft corrects for any variation in the outer diameter of the optical fiber perform.

Japanese Patent Application Publication No. 2000-7369 addresses a problem that occurs when a porous preform is clarified by being passed through a consolidation furnace from the top to the bottom and provides a means for overcoming this problem. According to this clarification method, the resulting consolidated product has a small outer diameter at a portion (lower end) which has been consolidated first, and a large outer diameter at a portion (upper end) which has been consolidated last. In order to overcome this problem, the method includes adjusting the amount of deposited glass particulate material during preparation of the porous preform so that the outer diameter of one end of the porous preform is larger that that of the other end of the porous preform.

In another method, a glass particulate deposit body is formed by accumulating a plurality of layers of glass particulate material formed by a burner traveling over the entire length of the effective portion of a porous preform to be formed. This method is referred to as a "full-length deposition method" in this specification.

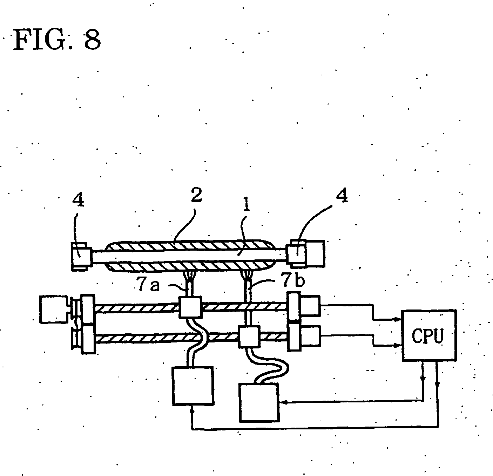

Japanese Patent Application Publication No. 4-292434 discloses an example of the full-length deposition method. This example is illustrated in Fig. 8. Two burners 7a and 7b for producing glass particulate material are placed facing the side of a glass rod 1 held by a rotating chuck 4. The glass rod 1 is stationary. The burners 7a and 7b are moved in reciprocating motion over the entire length covering the effective portion of a porous preform 2 to be formed so that the glass particulate material produced at the burners 7a and 7b are deposited on the glass rod 1 to make the porous preform 2. In this example, a core and a cladding constitute the glass rod, and the ratio of the outer diameter of the cladding to the outer diameter of the core (cladding-core ratio) of the glass rod is determined in advance. The traversing velocity of the burners and the amount of the glass raw material gas supplied to the burners are controlled according to changes in cladding-core ratio in the longitudinal direction.

### Disclosure of Invention

An object of the present invention is to provide a multi-burner multi-layer deposition method of making an optical fiber preform having an uniform jacketing ratio and a small divergence from the target value even when a glass rod with a core having outer diameters or refractive index profiles that vary in the longitudinal direction is used as the starting rod and to provide an optical fiber preform fabricated by the method.

To achieve this object, the present invention provides a method of making an optical fiber preform comprising the steps set out in claim 1. The method of the present invention including the steps of: placing at least three burners for producing glass particulate material so as to face the side surface of a glass rod with a core, in a range covering substantially entire length of the effective portion of a porous preform to be formed; moving the burners relative to and parallel to the glass rod by a predetermined length in reciprocating motion while rotating the glass rod; shifting the turning point of the reciprocating motion by a specified length in a predetermined direction; changing the shifting direction of the turning point to an opposite direction after the turning point has been shifted by a distance equal to the interval between the burners; and repeating such operation to deposit glass particulate material produced by the burners on the glass rod to form a porous preform. In this method the distribution of target jacketing ratios of the optical fiber preform, from which an optical fiber of desired characteristics is produced, is determined in the longitudinal direction of the glass rod. The jacketing ratio as used herein is defined as the ratio of the diameter of the consolidated optical fiber preform to the diameter of the glass rod. Based on the target jacketing ratio distribution in the longitudinal direction of the glass rod, the amount of the glass particulate material supplied from each burner to each point is adjusted and thereby a porous preform is made. The porous preform is clarified and an optical fiber preform is made.

The optical fiber preform made by the above-described method, has a divergence ratio over the entire length which is at least 0.95 but no more than 1.05. The divergence ratio is defined as a ratio of a target jacketing ratio to a jacketing ratio of a resulting preform.

### Brief Description of the Drawings

Figure 1 shows an example of an apparatus used to make a porous preform of the present invention.
Figure 2 is a graph indicating a target jacketing ratio at each point of the core rods of Example 1 and Comparative example 1. Figure 3 is a graph indicating a divergence ratio at each point of the optical fiber preform made in Example 1.
Figure 4 is a graph showing a raw material flow rate and an outer diameter at each point of a core rod of Example 2.
Figure 5 is a graph showing a divergence ratio at each point of the optical fiber preform made in Example 2.
Figure 6 is a graph showing a divergence ratio at each point of the optical fiber preform made in Comparative example 1.
Figure 7 shows an example of a conventional method of making a porous preform.
Figure 8 shows another example of a conventional method of making a porous preform.

### Best Mode for Carrying Out the Invention

The outer diameters or the refractive index profile of a glass rod (i.e., a starting rod) including a core are measured at a plurality of measurement points in the longitudinal direction. In order to obtain an optical fiber preform that can produce optical fibers having desired characteristics, the target value with respect to the ratio of diameter of optical fiber preform to diameter of glass rod is determined for each measurement point. Hereinafter the ratio is referred to as the "jacketing ratio". Both the outer diameter and the refractive index-profile may be determined at each measurement point. It is preferable that there be as many measurement points as possible.

Subsequently, the amount of glass particulate material to be deposited on the starting rod for obtaining an optical fiber preform having the target jacketing ratio is determined for each of the measurement points such that the necessary amount of glass particulate material is supplied to each measurement point from a burner that can oppose the corresponding measurement point. For example, the amount of glass particulate material produced at a particular burner that supplies glass particulate material to a point at which a larger amount of glass particulate material is to be deposited is made larger than that of other burners. Alternatively, the traveling speed of the burner passing over this point may be decreased to supply a large amount of glass particulate material. In these manners, a porous preform that is appropriate for making an optical fiber preform substantially satisfying the target values over the entire length can be fabricated even when target jacketing ratios vary in the longitudinal direction of the starting rod.

For example, depositing a jacketing layer is performed on a starting rod having an outer diameter of 30 mm (density: 2.2 g/cm³) to make a porous preform having an outer diameter of 200 mm and an average bulk density of the glass particulate deposit of 0.5 g/cm³. This porous preform is clarified and a glass rod having a density of 2.2 g/cm³ and the outer diameter of 99 mm is obtained. The target jacketing ratio is 3.3. If the starting rod has a variation of approximately 3 mm in the outer diameter, the jacketing ratio of 3.3 can be obtained by depositing glass particulate material on the starting rod so that the variation in diameter of the resulting porous preform is approximately 20 mm corresponding to the variation in the outer diameter of the starting rod and performing the clarification thereof.

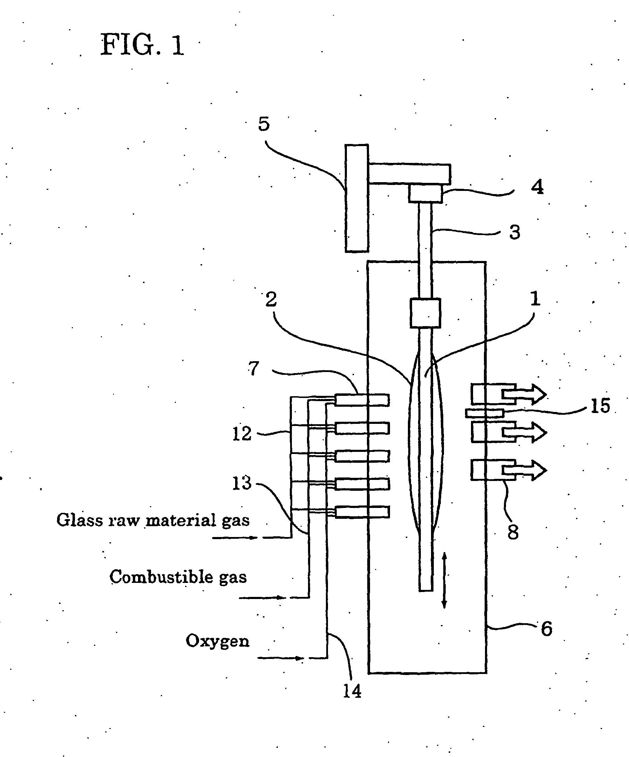

As shown in Fig. 1, at least three burners 7 for producing glass particulate material are placed facing the side surface of a rotating glass rod 1 in a reaction vessel 6 substantially over the entire length of an effective portion of a porous preform 2 to be formed. The glass rod 1 is a core itself or is a rod consisting of a core and part of a cladding around the core. The glass rod 1 is connected to a supporting rod 3 and is rotated by a rotating chuck 4. The burners 7 are allowed to move relative to the glass rod 1 in reciprocating motion by a predetermined length parallel to the glass rod 1. In Fig. 1, the glass rod 1 is moved vertically in relative movement in reciprocating motion using a lifting device 5. The turning point of the movement in reciprocating motion is shifted in a predetermined direction by a predetermined length. After the turning point has been shifted by a distance substantially equal to the interval between the burners, the turning point is shifted in a direction opposite the above-described predetermined direction. This operation is repeated so that the turning points are dispersed in a range over the entire length of the preform. Meanwhile, glass particulate material produced at the burners 7 are deposited on the glass rod 1 layer by layer and thereby the porous preform 2 is made. Undeposited glass particulate material is exhausted from an exhaust 8. The temperature of the glass rod on which glass particulate material is deposited and the temperature of the surface of the porous preform during deposition are measured with a radiation thermometer 15.

To the burners 7 for producing glass particulate material, a glass raw material gas is supplied via a pipe 12, a combustible gas is supplied via a pipe 13, and oxygen is supplied via a pipe 14. The combustible gas is mixed with oxygen at the burners 7 and undergoes combustion while the glass raw material gas is hydrolyzed to form glass particulate material. The glass particulate material formed at a particular burner deposits on the surface of the glass rod 1 or the growing porous preform 2 at a region opposing the burner, thereby forming the porous preform 2. Hydrogen or hydrocarbons such as methane may be used as the combustible gas.

The predetermined length of the movement in reciprocating motion is preferably substantially equal to or smaller than the burner interval. The two ends of the porous preform have smaller outer diameters than the other portion. These ends are ineffective portions from which no good optical fiber is produced. By making the predetermined traverse length of the burners in the reciprocating motion smaller than the burner interval, the ineffective portions can be decreased and the effective portion increased. In making such predetermined traverse length shorter than the burner interval, the traverse length may be set at 1/n of the burner interval (n is a natural number of 2 or more) so that the start position of the glass particulate material deposition coincides with the end position of the deposition. As a result, the ineffective portions at the two ends of the porous preform can be further decreased.

The amount of glass particulate material supplied to a region where there is a substantial variation in the outer diameter or the refractive index profile of the glass rod is changed in a step, in multi-steps, or preferably in a continuous manner. Only the burners that supply glass particulate material to regions having a substantial change in outer diameter or in refractive index profile may be adjusted to change the amount of the glass particulate material produced at these burners. Examples of the change in refractive index profile include a change in the outer diameter and/or a change in the relative refractive index difference of the core. The conditions for producing glass particulate material by a burner may be different from those of other burners from the start to the end of glass particulate deposition, or may be different at the start, being set to the same conditions later during the deposition of glass particulate material, or may be the same at the start and changed in the middle of the deposition to the end. Alternatively, the conditions may be changed temporarily during the process of deposition. More accurate control is possible by changing the amount of glass particulate material produced by a burner for a particular period when the turning point is located in a predetermined range and the burner is located within the predetermined range.

Even when the amount of glass particulate material produced at the burner is changed, the temperature of the surface on which glass particulate material are deposited is preferably in the range of ±50°C of a preset temperature. In other words, the temperature of the deposit surface is controlled within a temperature range of 100°C including the preset temperature at the center. A range of ± 20°C of the preset temperature is more preferable. In order to adjust the temperature of the deposit surface within this range, the flow rate of the combustible gas or the flow rate of oxygen is changed at the same time that the amount of glass particulate material produced is changed. When the temperature of the deposit surface is within this range, the variation in bulk density of the deposited layer of glass particulate material can be decreased, whereby cracks and local clarification failures of the porous preform can be prevented, which results in high yield.

When hydrogen is used as the combustible gas and the flow rate of the glass raw material gas is changed by 10%, the amount of hydrogen supply is preferably changed by 5 to 15%. When the flow rate of the glass raw material gas is changed by X% from the flow rate immediately before, the hydrogen supply may be changed by X/2 to 3X/2%. The temperature at the deposit surface can be maintained within the range of ±50°C of the preset temperature by increasing the flow rate of hydrogen when the flow rate of the glass raw material gas is increased or by decreasing the flow rate of hydrogen when the flow rate of the glass raw material gas is decreased.

When the flow rate of the glass raw material gas is changed without changing the flow rate of the combustible gas, the temperature of the flame changes as the amount of the glass particulate material generated at the burner changes. Thus, local variation in bulk density occurs at re gions where the glass particulate material is deposited. As a result, the porous preform may crack. Moreover, during clarification, the deposited layers of glass particulate material may separate from the glass rod, or cracks or local clarification failure may occur.

In a method in which the movement of each burner is independently controlled, a traveling speed of a burner passing over the region where a different amount of glass particulate material is to be deposited can be set to a speed different from that when it passes over other regions so that the amount of glass particulate material deposited on the region can be changed. In order to deposit a larger amount of glass particulate material in a particular region than in other regions, the traveling speed of the burner passing through this region is decreased compared to that through other regions. In order to deposit a smaller amount of glass particulate material in a particular region, the traveling speed of the burner passing through this region is increased compared to that through other regions.

When the outer diameter or the refractive index profile of the starting rod changes periodically in the longitudinal direction, the interval between the burners is preferably equal to or smaller than that period. In this manner, the periodical change can be modified by simply changing the conditions of producing glass particulate material at particular burners, and an optical fiber preform having target jacketing ratios over the entire length can be made.

When the variation in outer diameter of the starting rod, in outer diameter of the core, or in relative refractive index difference of the core in the longitudinal direction is within ±30% of the corresponding average value, the jacketing ratio can be controlled by adjusting the conditions of producing the glass particulate material at the burners.

The characteristics of the resulting porous preform are evaluated based on a divergence ratio, i.e., a ratio of the jacketing ratio of the resulting optical fiber preform to the target jacketing ratio. In this invention, the variation in divergence ratio can be made smaller than the variation in target jacketing ratio or the variation in outer diameter of the glass rod, whichever is larger. When the divergence ratio is within the range of 0.95 to 1.05, the characteristics such as mode field diameter (MFD) or cut-off wavelength are within the target and are satisfactory.

Note that the glass rod with a core used as the starting rod may be a rod which is a core itself of a dispersion compensating fiber or a dispersion-shifted fiber having a complex refractive index profile or may be a rod comprising such a core and a cladding. Alternatively, it may be a rod which is a core itself having a graded index refractive index profile or may be a rod comprising such a core and a cladding.

All of the above-described documents related to the background art aim to decrease to the extent possible the nonuniformity in outer diameter of the porous preform or the optical fiber preform after consolidation. However, the document related to the multi-burner multi-layer deposition method does not take into consideration the case where the outer diameter of the glass rod or the refractive index profile of the core varies along the longitudinal direction. In such a case, a product having the target jacketing ratio cannot be made even when the outer diameter of the porous preform or the optical fiber preform after consolidation is made uniform.

Moreover, as in the case of dispersion compensating fibers and non-zero dispersion-shifted fibers, when the fiber characteristics are readily varied in response to the refractive index profile of the core, it is necessary to change the amount of glass particulate material to be deposited as a cladding portion, with respect to not only the variation in outer diameter of the starting rod but also the variation in refractive index.

The difference between the multi-burner multi-layer deposition method and the full-length deposition method lies in the time taken for a burner that has passed through a particular region of the glass rod to again pass through that region. The multi-burner multi-layer deposition method consume less time, and the deposited layers of glass particulate material are constantly within high temperatures, allowing the bulk density of the deposited layers of the glass particulate material to be high. In contrast, according to the full-length deposition method, the bulk density is low. Accordingly, in respect of the bulk density of porous preform the technology relating to the full-length deposition method cannot be simply applied to the multi-burner multi-layer deposition method.

In the conventional technology, in the case where a glass rod having a core with variations in outer diameter or refractive index profile is used, since the target jacketing ratios are different along the longitudinal direction of the starting rod, it is necessary to divide the glass rod into pieces to be used as starting rods so that their variation in outer diameter or in refractive index profile along the longitudinal direction becomes sufficiently small. The target jacketing ratio is then set for each piece of the starting rod; and glass particulate material is deposited thereon.

When a glass rod is divided into pieces as starting rods, the length of the resulting porous preform is small, and an optical fiber produced from one such optical fiber preform becomes short. Accordingly, preliminary work, such as installing an optical fiber preform to a drawing apparatus, increases relatively, resulting in low production efficiency. Since good optical fibers cannot be obtained at the start and the end of the drawing operation, the percentage of obtaining good fibers is low.

### (Example 1)

The porous preform 2 was prepared using an apparatus having the structure shown in Fig. 1 with five burners 7 for producing glass particulate material arranged at an interval of 200 mm. The glass rod 1 was moved vertically in reciprocating motion while being rotated, and thereby the burners 7 relatively move to the glass rod 1. The length of each traverse was substantially equal to the burner interval. The turning point was shifted by 20 mm at each traverse. When the turning point had been shifted by 200 mm, the shift of turning point was changed to the opposite direction. After the turning point was returned to the initial position, the turning point was shifted to the initial direction. These steps were repeated and glass particulate material was deposited on the starting rod.

Twenty relative movements of reciprocating motion were performed between the glass rod 1 and the burners 7 until the turning point was returned to the initial position. These twenty relative movements constituted one set, and fifty sets of relative movements were performed.

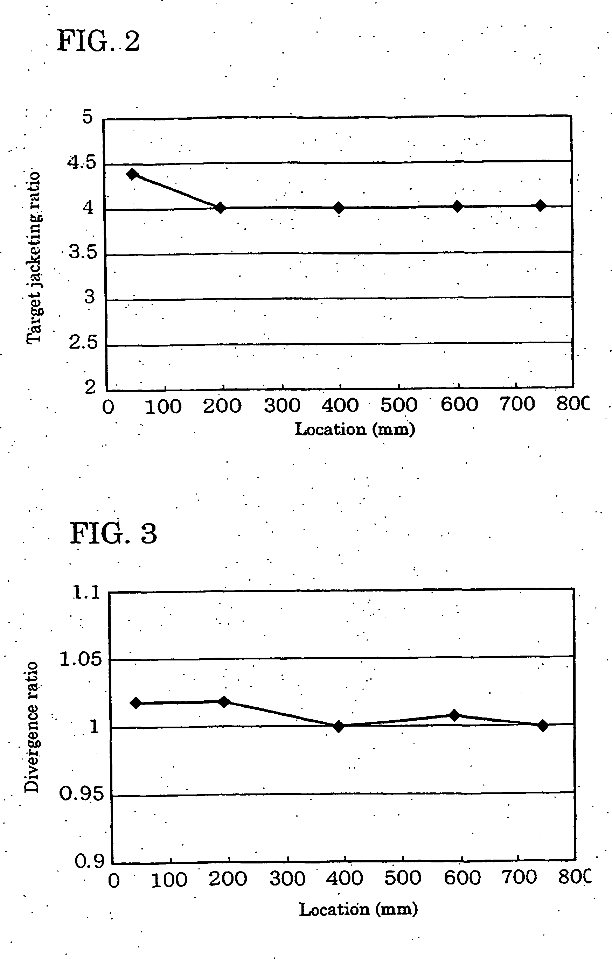

The outer diameter of a glass rod used was 20 mm and uniform. The refractive index profiles at five points (positions 50, 200, 400, 600, and 750 mm from the upper end) were measured with a preform analyzer in the portion of 800 mm length of the glass rod that would constitute an optical fiber preform, and the target jacketing ratio was determined for each point. As shown in Fig. 2, the target values varied, the variation being 10%. The gas supplied to each burner under standard temperature and pressure contained 4 liter/min of SiCl₄ as the glass raw material gas, 50 to 100 liter/min of hydrogen (in early stage 50 liter/min, increasing as the deposition of the porous preform 2 proceeds, and eventually 100 liter/min), and 80 liter/min of oxygen. At each burner, SiCl₄ was hydrolyzed to form glass particulate material, and the glass particulate material was deposited on the glass rod layer by layer. In reference to the graph of Fig. 3, the region 0 to 200 mm from the upper end of the optical fiber preform was deposited with glass particulate materials produced by the burners at the top and second to the top. The region 200 to 400 mm from the upper end was deposited with glass particulate materials produced by the burners second to the top and third to the top. The region 400 to 600 mm from the upper end was deposited with glass particulate materials produced by the burners third to the top and fourth to the top. The region 600 to 800 mm from the upper end was deposited with glass particulate materials produced by the burners fourth to the top and fifth to the top.

The top burner for the portion where the target jacketing ratio is the largest was supplied with SiCl₄ in an amount of 4.5 liter/min, which is 0.5 liter/min larger than 4 liter/min under standard temperature and pressure, for depositing of the 700th to 1,000th layers of a 1,000-layer deposit.

The temperature of the surface to which the glass particulate material was deposited was measured with a two-dimensional infrared radiation thermometer (a thermo tracer available from NEC San-ei Instruments, Ltd.), and the flow rate of hydrogen was adjusted so that the temperature of the deposit surface was within the range of 680 to 700°C. Since the temperature of the deposit surface decreases as the deposition of glass particulate material proceeds, the hydrogen flow rate was increased to maintain the temperature of the deposit surface at, at least 680°C. In increasing the hydrogen flow rate, the amount of increase was controlled to 6% or less of the flow rate immediately before so as not to excessively increase the temperature of the deposit surface. When the flow rate of SiCl₄ supplied to the top burner was decreased, the hydrogen flow rate was decreased by approximately 7% so as not to excessively increase the temperature of the deposit surface.

The resulting porous preform 2 was held in a furnace maintained at a high temperature of approximately 1,500°C and was clarified into a transparent glass. The divergence ratio was examined. As shown in Fig. 3, the divergence ratio was within the range of 1 to 1.02, and an optical fiber preform having the target jacketing ratio over the entire length was produced. In this example, the variation in divergence ratio was 2%, which was smaller than the variation in target jacketing ratios, which was 10% as described above.

### (Example 2)

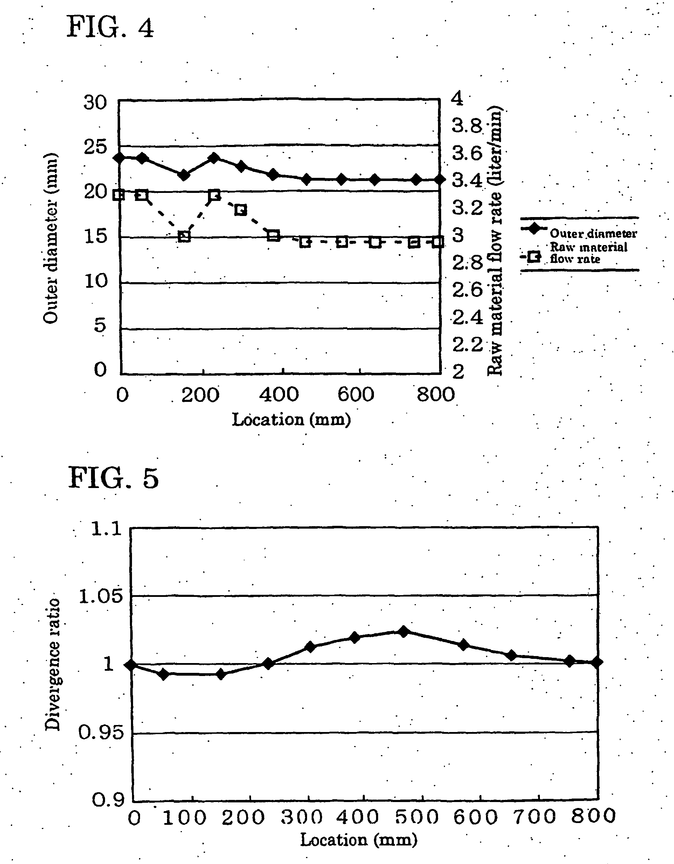

As in Example 1, glass particulate material was deposited using an apparatus having the structure shown in Fig. 1. The glass rod 1 that was used had the uniform target jacketing ratio of 3.1; however, in the portion of 800 mm length of the glass rod that would constitute an optical fiber preform, the outer diameters at the points 0, 50, 150, 230, 300, 380, 460, 560, 650, 750, and 800 mm from the upper end of that portion varied in the range of 24 mm to 21 mm, as shown in the graph of Fig. 4. The amount of the glass raw material gas, SiCl₄, supplied to the burner 7 at the top and second to the top was changed within the range of 3.3 liter/min to 2.95 liter/min so as to correspond with the outer diameters of the glass rod 1 at the positions opposite the burners 7. As for the third to fifth burners 7 from the top, which were positioned opposite the lower half of the glass rod 1, the amount was set to a constant 2.95 liter/min and glass particulate material was deposited in the same manner of relative movement of the burners 7 as Example 1.

To the burners third to fifth from the top, 50 to 100 liter/min of hydrogen (in early stage 50 liter/min, gradually increased as the deposition of the porous preform 2 proceeds, eventually reaching 100 liter/min) and 80 liter/min of oxygen were supplied to deposit 1,000 layers. The flow rate of hydrogen supplied to the burners at the top and second to the top was increased by 15% compared to other burners when SiCl₄ is supplied at a rate of 3.3 liter/min. The hydrogen flow rate was adjusted so that the temperature of the glass particulate deposit surface measured with a two-dimensional radiation thermometer was maintained in the range of 710 to 750°C.

The resulting porous preform 2 was held in a furnace maintained at a high temperature and was clarified into transparent glass. The divergence ratio was examined. As shown in Fig. 5, the divergence ratio was within the range of 0.98 to 1.02, exhibiting stable characteristics over the entire length. In this example, the variation in divergence ratio was 4%, which was smaller than the variation in outer diameter of the glass rod, which was 10% as described above.

As can be understood from Examples 1 and 2 described above, the optical fiber preform made according to the method of the present invention has a divergence ratio of 0.95 to 1.05 over the entire length. The characteristics such as MFD and cut-off wavelength fall within the target ranges and are superior.

### (Comparative example 1)

Using a glass rod having the same outer diameter and refractive index profile as those of the glass rod used in Example 1, the porous preform 2 was made as in Example 1 except that the amount of raw materials supplied to the burners 7 at the top and second to the top was not increased and was the same as those of the other burners 7.

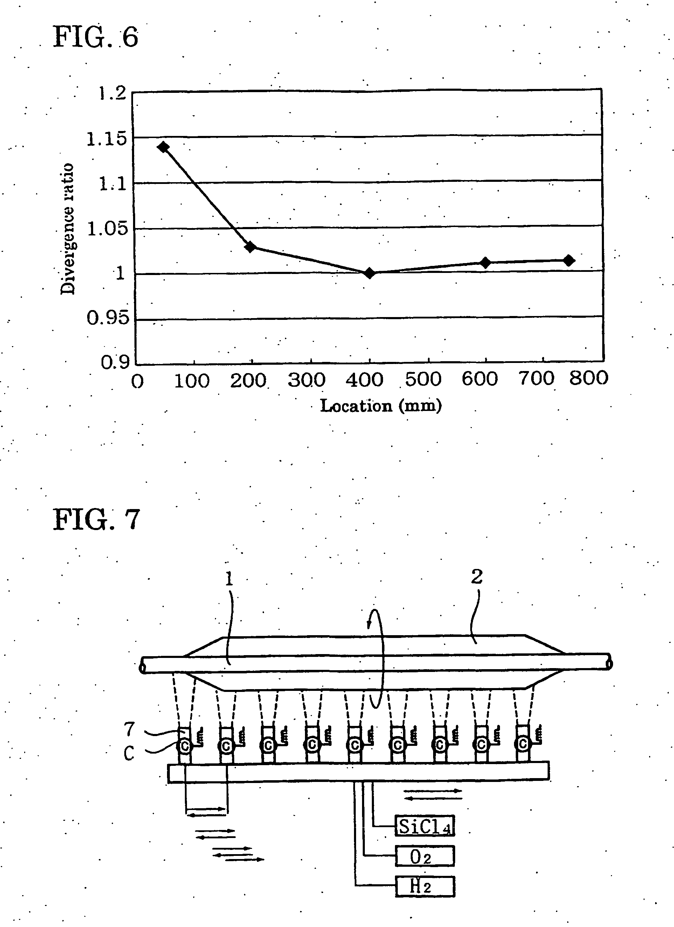

The resulting porous preform 2 was held in a furnace maintained at a high temperature and clarified into transparent glass. The characteristics were evaluated based on the divergence ratio. As shown in Fig. 6, the variation was large, i.e., ranging from 1 to 1.14, and some of the fibers drawn therefrom were inferior.

### Industrial Applicability

According to a method of the present invention, whereby a porous preform is made by a multi-burner multi-layer deposition process, and is clarified into transparent glass to form an optical fiber preform, an optical fiber preform having target jacketing ratios over the entire length can be fabricated even when a glass rod with a core having a variation in refractive index profile or in outer diameter is used. In the optical fiber preform made according to the present invention, a portion having uniform jacketing ratios is longer as compared with conventional optical fiber preforms, and production efficiency for drawing an optical fiber from the optical fiber preforms is high. Since the optical fiber preform need not be divided into pieces depending on the variation in target jacketing ratio as in the conventional methods, the amount of discarded defective portion is decreased.

## Claims

1. A method of making an optical fiber preform comprising the steps of:
placing at least three burners (7) for producing glass particulate material so as to face the side surface of a glass rod (1) with a core, in a range covering substantially entire length of the effective portion of a porous preform (2) to be formed;
moving the burners (7) relative to and parallel to the glass rod by a predetermined length in reciprocating motion while rotating the glass rod;
shifting the turning point of the reciprocating motion by a specified length in a predetermined direction;
changing the shifting direction of the turning point to an opposite direction after the turning point has been shifted by a distance equal to the interval between the burners;
repeating such operation to deposit glass particulate material produced by the burners on the glass rod to form a porous preform; and vitrifying the porous preform (2),
**characterized by** further comprising the steps of:
measuring the outer diameter or the refractive index profile of the glass rod at a plurality of points in the longitudinal direction of the glass rod;
determining target jacketing ratios (ratios of outer diameters of the optical fiber preform (2) to outer diameters of the glass rod (1)) at a plurality of points in the longitudinal direction of the glass rod; and
adjusting the amount of the glass particulate material supplied from the burners to each of the plurality of points based on the ratios.

2. A method of making an optical fiber preform according to claim 1, wherein the variation in divergence ratio (ratio of the target jacketing ratio to a jacketing ratio of the resulting preform) in the longitudinal direction of the resulting optical fiber preform is smaller than the variation in target jacketing ratio or the variation in outer diameter of the glass rod, whichever is larger.

3. A method of making an optical fiber preform according to claim 2, wherein the divergence ratio of the resulting optical fiber preform is not less than 0.95 but not more than 1.05 over the entire length.

4. A method of making an optical fiber preform according to any one of claims 1 to 3, wherein the longitudinal variations of the glass rod in terms of the outer diameter thereof, the outer diameter of the core, or the relative refractive index difference of the core are within ±30% of the average value in the longitudinal direction, respectively.

5. A method of making an optical fiber preform according to any one of claims 1 to 4, wherein amount of the glass particulate material produced at each burner is controlled by adjusting flow rate of a glass raw material gas.

6. A method of making an optical fiber preform according to any one of claims 1 to 5, wherein the interval between the burners is shorter than a period of change in glass rod outer diameter or refractive index profile.

7. A method of making an optical fiber preform according to any one of claims 1 to 6, wherein the temperature range of a surface on which the glass particulate material is deposited is within 100°C.

8. A method of making an optical fiber preform according to claim 7, wherein a flow rate of a combustible gas is increased as the deposition of the glass particulate material proceeds.

9. A method of making an optical fiber preform according to claim 7, wherein amounts of the glass raw material gas and oxygen or the combustible gas supplied to each burner are changed to adjust amount of glass particulate material produced at each bumer.

10. A method of making an optical fiber preform according to claim 9, wherein hydrogen is used as the combustible gas, and a flow rate of the hydrogen is changed by an amount in the range of 5 to 15%.

11. A method of making an optical fiber preform according to claim 9, wherein hydrogen is used as the combustible gas, and a rate of change in a flow rate of the hydrogen is X/2 to 3X/2%, X% being a rate of change in a flow rate of the glass raw material gas.

12. A method of making an optical fiber preform according to any one of claims 1 to 11, wherein the predetermined length of the relative movement in the reciprocating motion between the glass rod and burners is smaller than the interval between the burners.

13. A method of making an optical fiber preform according to claim 12, wherein the predetermined length of the relative movement in reciprocating motion between the glass rod and burners is l/n of the interval between the burners, n being a natural number of 2 or more.

## Patentansprüche

1. Verfahren zum Herstellen einer Lichtleitfaser-Vorform, das die folgenden Schritte umfasst:
Anordnen von wenigstens drei Brennern (7) zum Erzeugen von Glas-Teilchenmaterial, so dass sie der Seitenfläche eines Glasstabes (1) mit einem Kern zugewandt sind, in einem Bereich, der im Wesentlichen die gesamte Länge des wirksamen Abschnitts einer porösen Vorform (2) abdeckt, die ausgebildet werden soll;
Bewegen der Brenner (7) relativ und parallel zu dem Glasstab um eine vorgegebene Länge in einer Hin- und Herbewegung bei gleichzeitiger Drehung des Glasstabes;
Verschieben des Wendepunktes der Hin- und Herbewegung um eine angegebene Länge in einer vorgegebenen Richtung;
Ändern der Verschiebungsrichtung des Wendepunktes auf eine entgegengesetzte Richtung, nachdem der Wendepunkt um eine Strecke verschoben worden ist, die dem Zwischenraum zwischen den Brennern entspricht;
Wiederholen dieses Vorgangs, um Glas-Teilchenmaterial, das durch die Brenner erzeugt wird, an dem Glasstab abzulagern und eine poröse Vorform auszubilden; und
Verglasen der porösen Vorform (2),
**dadurch gekennzeichnet, dass** es des Weiteren die folgenden Schritte umfasst:
Messen des Außendurchmessers oder des Brechungsindexprofils des Glasstabes an einer Vielzahl von Punkten in der Längsrichtung des Glasstabes;
Bestimmen von Soll-Ummantelungsverhältnissen (Verhältnisse von Außendurchmessern der Lichtleitfaser-Vorform (2) zu Außendurchmessern des Glasstabes (1)) an einer Vielzahl von Punkten in der Längsrichtung des Glasstabes; und
Regulieren der Menge des Glas-Teilchenmaterials, das von den Brennern jedem der Vielzahl von Punkten zugeführt wird, auf Basis der Verhältnisse.

2. Verfahren zum Herstellen einer Lichtleitfaser-Vorform nach Anspruch 1, wobei die Variation des Divergenzverhältnisses (Verhältnis des Soll-Ummantelungsverhältnisses zu einem Ummantelungsverhältnis der entstehenden Vorform) in der Längsrichtung der entstehenden Lichtleitfaser-Vorform in Abhängigkeit davon, welche der beiden größer ist, geringer ist als die Variation des Soll-Ummantelungsverhältnisses oder die Variation des Außendurchmessers des Glasstabes,

3. Verfahren zum Herstellen einer Lichtleitfaser-Vorform nach Anspruch 2, wobei das Divergenzverhältnis der entstehenden Lichtleitfaser-Vorform nicht weniger als 0,95 jedoch nicht mehr als 1,05 über die gesamte Länge beträgt.

4. Verfahren zum Herstellen einer Lichtleitfaser-Vorform nach einem der Ansprüche 1 bis 3, wobei die Variationen des Glasstabes bezüglich des Außendurchmessers in Längsrichtung desselben, des Außendurchmessers des Kerns oder der Differenz des relativen Brechungsindex des Kerns innerhalb von ±30 % des Durchschnittswertes in der Längsrichtung liegen.

5. Verfahren zum Herstellen einer Lichtleitfaser-Vorform nach einem der Ansprüche 1 bis 4, wobei die Menge des Glas-Teilchenmaterials, die an jedem Brenner erzeugt wird, gesteuert wird, indem eine Strömungsmenge eines Glas-Ausgangsmaterialgases reguliert wird.

6. Verfahren zum Herstellen einer Lichtleitfaser-Vorform nach einem der Ansprüche 1 bis 5, wobei der Abstand zwischen den Brennern kürzer ist als eine Periode der Änderung des Außendurchmessers oder des Brechungsindexprofils des Glasstabes.

7. Verfahren zum Herstellen einer Lichtleitfaser-Vorform nach einem der Ansprüche 1 bis 6, wobei der Temperaturbereich einer Fläche, auf der das Glas-Teilchenmaterial abgeschieden wird, innerhalb von 100°C liegt.

8. Verfahren zum Herstellen einer Lichtleitfaser-Vorform nach Anspruch 7, wobei eine Strömungsmenge eines brennbaren Gases im Verlauf der Abscheidung des Glas-Teilchenmaterials erhöht wird.

9. Verfahren zum Herstellen einer Lichtleitfaser-Vorform nach Anspruch 7, wobei die Mengen des Glas-Ausgangsmaterialgases und an Sauerstoff oder des brennbaren Gases, die jedem Brenner zugeführt werden, verändert werden, um die Menge an Glas-Teilchenmaterial zu regulieren, die an jedem Brenner erzeugt wird.

10. Verfahren zum Herstellen einer Lichtleitfaser-Vorform nach Anspruch 9, wobei Wasserstoff als das brennbare Gas eingesetzt wird und eine Strömungsmenge des Wasserstoffs um ein Maß im Bereich von 5 bis 15 % verändert wird.

11. Verfahren zum Herstellen einer Lichtleitfaser-Vorform nach Anspruch 9, wobei Wasserstoff als das brennbare Gas verwendet wird und eine Rate der Änderung der Strömungsgeschwindigkeit des Wasserstoffs X/2 bis 3X/2 % beträgt, wobei X % eine Rate der Änderung der Strömungsgeschwindigkeit des Glas-Ausgangsmaterialgases ist.

12. Verfahren zum Herstellen einer Lichtleitfaser-Vorform nach einem der Ansprüche 1 bis 11, wobei die vorgegebene Länge der relativen Bewegung bei der Hin- und Herbewegung zwischen der Glasstange und den Brennern geringer ist als der Abstand zwischen den Brennern.

13. Verfahren zum Herstellen einer Lichtleitfaser-Vorform nach Anspruch 12, wobei die vorgegebene Länge der relativen Bewegung bei der Hin- und Herbewegung zwisehen dem Glasstab und den Brennern 1/n des Intervalls zwischen den Brennern beträgt, wobei n eine natürliche Zahl ist, die 2 oder mehr beträgt.

## Revendications

1. Procédé de fabrication d'une préforme de fibre optique comprenant les étapes consistant à :
disposer au moins trois brûleurs (7) pour produire un matériau particulaire de verre de manière à revêtir la surface latérale d'une tige de verre (1) avec un noyau, dans une plage couvrant sensiblement toute la longueur de la partie effective d'une préforme poreuse (2) à former ;
déplacer les brûleurs (7) par rapport à la tige de verre et de manière parallèle à celle-ci sur une longueur prédéterminée dans un mouvement de va-et-vient tout en tournant la tige de verre ;
modifier le point de retour du mouvement de va-et-vient sur une longueur spécifiée dans une direction prédéterminée ;
changer la direction de modification du point de retour pour une direction opposée lorsque le point de retour a été modifié sur une distance égale à l'intervalle entre les brûleurs ;
répéter cette opération pour déposer le matériau particulaire de verre produit par les brûleurs sur la tige de verre pour former une préforme poreuse ; et vitrifier la préforme poreuse (2),
**caractérisé en ce qu'**il comprend en outre les étapes consistant à :
mesurer le diamètre extérieur ou le profil d'indice de réfraction de la tige de verre au niveau d'une pluralité de points dans la direction longitudinale de la tige de verre ;
déterminer des rapports de gainage cibles (rapports des diamètres extérieurs de la préforme de fibre optique (2) aux diamètres extérieurs de la tige de verre (1)) au niveau d'une pluralité de points dans la direction longitudinale de la tige de verre ; et
ajuster la quantité de matériau particulaire de verre fournie par les brûleurs à chacun de la pluralité de points en fonction des rapports.

2. Procédé de fabrication d'une préforme de fibre optique selon la revendication 1, dans lequel la variation des rapports de divergence (rapport du rapport de gainage cible à un rapport de gainage de la préforme résultante) dans la direction longitudinale de la préforme de fibre optique résultante est inférieure à la variation la plus grande entre la variation de rapport de gainage cible et la variation de diamètre extérieur de la tige de verre.

3. Procédé de fabrication d'une préforme de fibre optique selon la revendication 2, dans lequel le rapport de divergence de la préforme de fibre optique résultante n'est pas inférieur à 0,95 mais pas supérieur à 1,05 sur toute la longueur.

4. Procédé de fabrication d'une préforme de fibre optique selon l'une quelconque des revendications 1 à 3, dans lequel les variations longitudinales de la tige de verre en termes de diamètre extérieur de celle-ci, de diamètre extérieur du noyau ou de la différence de l'indice de réfraction relatif du noyau sont comprises dans la plage de ± 30 % de la valeur moyenne dans la direction longitudinale, respectivement.

5. Procédé de fabrication d'une préforme de fibre optique selon l'une quelconque des revendications 1 à 4, dans lequel la quantité de matériau particulaire de verre produite au niveau de chaque brûleur est contrôlée en ajustant la vitesse d'écoulement d'un gaz pour matériau de verre à l'état brut.

6. Procédé de fabrication d'une préforme de fibre optique selon l'une quelconque des revendications 1 à 5, dans lequel l'intervalle entre les brûleurs est plus court qu'une période de changement du diamètre extérieur de la tige de verre ou du profil d'indice de réfraction.

7. Procédé de fabrication d'une préforme de fibre optique selon l'une quelconque des revendications 1 à 6, dans lequel la plage de température d'une surface sur laquelle le matériau particulaire de verre est déposé est aux environs de 100 °C.

8. Procédé de fabrication d'une préforme de fibre optique selon la revendication 7, dans lequel on augmente une vitesse d'écoulement d'un gaz combustible au cours du dépôt de matériau particulaire en verre.

9. Procédé de fabrication d'une préforme de fibre optique selon la revendication 7, dans lequel les quantités de gaz et d'oxygène pour le matériau de verre brut ou de gaz combustible fourni à chaque brûleur sont modifiées pour ajuster la quantité de matériau particulaire de verre produite au niveau de chaque brûleur.

10. Procédé de fabrication d'une préforme de fibre optique selon la revendication 9, dans lequel on utilise de l'hydrogène comme gaz combustible et on modifie une vitesse d'écoulement de l'hydrogène par une quantité comprise dans la plage de 5 à 15 %.

11. Procédé de fabrication d'une préforme de fibre optique selon la revendication 9, dans lequel on utilise de l'hydrogène comme gaz combustible et un taux de changement de la vitesse d'écoulement de l'hydrogène est de X / 2 à 3X / 2 %, X % étant un taux de changement d'une vitesse d'écoulement du gaz pour le matériau de verre à l'état brut.

12. Procédé de fabrication d'une préforme de fibre optique selon l'une quelconque des revendications 1 à 11, dans lequel la longueur prédéterminée du mouvement relatif du mouvement de va-et-vient entre la tige de verre et les brûleurs est inférieure à l'intervalle entre les brûleurs.

13. Procédé de fabrication d'une préforme de fibre optique selon la revendication 12, dans lequel la longueur prédéterminée du mouvement relatif du mouvement de va-et-vient entre la tige de verre et les brûleurs est l / n de l'intervalle entre les brûleurs, n étant un nombre entier naturel supérieur ou égal à 2.
